# EUROPÄISCHE PATENTANMELDUNG

(11) **EP 3 276 997 A1**
(43) Veröffentlichungstag der Anmeldung: **31.01.2018**
(21) Anmeldenummer: 16182102.0
(22) Anmeldetag: 29.07.2016
(51) Int. Cl.: H04W 8/20, H04W 12/08

(54) **PROFILSERVER ZUM BEREITSTELLEN VON ELEKTRONISCHEN KOMMUNIKATIONSPROFILEN FÜR ELEKTRONISCHE TEILNEHMERIDENTITÄTSMODULEN (ESIMS)**

(71) Anmelder: Deutsche Telekom AG, 53113 Bonn (DE)
(72) Erfinder: Kaliner, Stefan, 53639 Königswinter (DE)
(74) Vertreter: Patentship Patentanwaltsgesellschaft mbH

(57) **Zusammenfassung**

Die vorliegende Erfindung betrifft einen Profilserver (100) zum Bereitstellen von elektronischen Kommunikationsprofilen (101, 103) für eine Gruppe (105) von elektronischen Teilnehmeridentitätsmodulen (105-1, 105-2) mobiler Kommunikationsgeräte, welche einem Benutzer eines Kommunikationsnetzwerks zugeordnet sind, wobei jedem elektronischen Teilnehmeridentitätsmodul (105-1, 105-2) eine elektronische Identifikation (elD) zugeordnet ist, mit einem Speicher (107), welcher eingerichtet ist, eine Mehrzahl von Gruppen (105) von elektronischen Kommunikationsprofilen (101, 103) zu speichern, wobei jede Gruppe (105) von elektronischen Kommunikationsprofilen (101, 103) elektronischen Teilnehmeridentitätsmodulen (105-1, 105-2) mobiler Kommunikationsgeräte eines Benutzers zugeordnet ist, einer Kommunikationsschnittstelle (109) zum Empfangen einer elektronischen Identifikation eines elektronischen Teilnehmeridentitätsmoduls, und einem Prozessor (111), welcher ausgebildet ist, der empfangenen elektronischen Identifikation eine in dem Speicher (107) gespeicherte Gruppe von elektronischen Kommunikationsprofilen (101, 103) zuzuordnen und ein elektronisches Kommunikationsprofil (101, 103) aus der Gruppe von elektronischen Kommunikationsprofilen (101, 103), welche der empfangenen elektronischen Identifikation zugeordnet ist, auszuwählen, wobei die Kommunikationsschnittstelle (109) ausgebildet ist, das ausgewählte elektronische Kommunikationsprofil (101, 103) an das mobile Kommunikationsgerät mit dem elektronischen Teilnehmeridentitätsmodul (105-1, 105-2), das durch die elektronische Identifikation identifiziert ist, auszusenden.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdrahtete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise eine zulässige Datenrate, des mit einem eSIM ausgestatteten mobilen Kommunikationsgerätes.

Im Auslieferungszustand sind die eSIMs in der Regel mit einem Bootstrapprofil versehen, welches eine initiale Konnektivität in das Kommunikationsnetzwerk ermöglicht und welches die Netzwerkadresse eines Discovery-Servers enthält. Der Discovery-Server ist vorgeschaltet und enthält die Angaben über Profilserver wie beispielsweise SMDP+ Server, welche die Kommunikationsprofile für die eSIMs verwalten.

Bei erstem Einbuchen in das Kommunikationsnetz übermittelt die eSIM die elektronische Identifikation (eID) eines eSIMs an den Discovery-Server. Dieser kann auf dieser Basis den Profilserver (z.B. SMDP+ Server) der eSIM zuordnen und die Netzwerkadresse des Profilservers an die eSIM übertragen.

Hat ein Benutzer jedoch mehrere Kommunikationsgeräte, welche jeweils mit einem eSIM ausgestattet sind, beispielsweise mehrere Hausgeräte, so muss für jedes Hausgerät ein Profil für die jeweilige eSIM bereitgestellt werden.

Es ist daher die Aufgabe der Erfindung, mehrere Kommunikationsprofile für die eSIMs von mehreren mobilen Kommunikationsgeräten eines Benutzers effizient bereitzustellen.

Diese Aufgabe wird durch die Merkmale der unabhängigen Ansprüche gelöst. Vorteilhafte Weiterbifdungsformen sind Gegenstand der abhängigen Ansprüche, der Figuren sowie der Beschreibung.

Die Erfindung basiert auf der Erkenntnis, dass die obige Aufgabe durch eine Gruppierung von Kommunikationsprofilen von eSIMs, welche einem Benutzer und insbesondere einer Vertragsbeziehung zwischen dem Benutzer und dem Betreiber des Kommunikationsnetzwerks zugeordnet sind, gelöst werden kann. Auf diese Weise können mehrere Kommunikationsprofile gemeinsam für einen Benutzer verwaltet werden.

Gemäß einem ersten Aspekt betrifft die Erfindung einen Profilserver zum Bereitstellen von elektronischen Kommunikationsprofilen für eine Gruppe von elektronischen Teilnehmeridentitätsmodulen (eSIM) mobiler Kommunikationsgeräte, welche einem Benutzer eines Kommunikationsnetzwerks zugeordnet sind, wobei jedem elektronischen Teilnehmeridentitätsmodul eine elektronische Identifikation (eID) zugeordnet ist, mit einem Speicher, welcher eingerichtet ist, eine Mehrzahl von Gruppen von elektronischen Kommunikationsprofilen zu speichern, wobei jede Gruppe von elektronischen Kommunikationsprofilen elektronischen Teilnehmeridentitätsmodulen mobiler Kommunikationsgeräte eines Benutzers zugeordnet ist, einer Kommunikationsschnittstelle zum Empfangen einer elektronischen Identifikation eines elektronischen Teilnehmeridentitätsmoduls, und einem Prozessor, welcher ausgebildet ist, der empfangenen elektronischen Identifikation eine in dem Speicher gespeicherte Gruppe von elektronischen Kommunikationsprofilen zuzuordnen und ein elektronisches Kommunikationsprofil aus der Gruppe von elektronischen Kommunikationsprofilen, welche der empfangenen elektronischen Identifikation zugeordnet ist, auszuwählen, wobei die Kommunikationsschnittstelle ausgebildet ist, das ausgewählte elektronische Kommunikationsprofil an das mobile Kommunikationsgerät mit dem elektronischen Teilnehmeridentitätsmodul, das durch die elektronische Identifikation identifiziert ist, auszusenden.

In einer Ausführungsform ist die Kommunikationsschnittstelle ausgebildet, eine Mehrzahl von elektronischen Identifikationen von elektronischen Teilnehmeridentitätsmodulen zu empfangen, wobei der Prozessor ausgebildet ist, der Mehrzahl von empfangenen elektronischen Identifikationen eine Gruppe oder mehrere Gruppen von elektronischen Teilnehmeridentitätsmodulen zuzuordnen, für jedes elektronische Teilnehmeridentitätsmodul ein Kommunikationsprofil aus der zugeordneten Gruppe von Kommunikationsprofilen auszuwählen und das jeweils ausgewählte Kommunikationsprofil an das jeweilige mobile Kommunikationsgerät auszusenden.

In einer Ausführungsform ist der Speicher ausgebildet, elektronische Identifikationen zu speichern, welche einer Gruppe von elektronischen Kommunikationsprofilen zugeordnet sind, wobei der Prozessor ausgebildet ist, die empfangene elektronische Identifikation mit gespeicherten elektronischen Identifikationen zu vergleichen, um die Gruppe von elektronischen Kommunikationsprofilen, welche der empfangenen elektronischen Identifikation zugeordnet ist, auszuwählen.

In einer Ausführungsform ist jede Gruppe von elektronischen Kommunikationsprofilen durch einen Identifikator identifizierbar, wobei jeder Identifikator elektronischen Identifikationen zugeordnet ist, und wobei der Prozessor ausgebildet ist, der empfangenen elektronischen Identifikation den Identifikator der Gruppe von elektronischen Kommunikationsprofilen zuzuordnen.

In einer Ausführungsform ist jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet, wobei der Prozessor ausgebildet ist, der empfangenen elektronischen Identifikation die Gruppe von elektronischen Kommunikationsprofilen auf der Basis der Vertragsbeziehung zuzuordnen.

In einer Ausführungsform ist der Profilserver ein SMDP-Server.

In einer Ausführungsform ist die Kommunikationsschnittstelle eine drahtlose Kommunikationsschnittstelle, insbesondere eine LTE- oder UMTS-Kommunikationsschnittstelle.

Gemäß einem zweiten Aspekt betrifft die Erfindung ein Verfahren zum Bereitstellen von elektronischen Kommunikationsprofilen für eine Gruppe von elektronischen Teilnehmeridentitätsmodulen (eSIM) mobiler Kommunikationsgeräte, welche einem Benutzer eines Kommunikationsnetzwerks zugeordnet sind, wobei jedem elektronischen Teilnehmeridentitätsmodul eine elektronische Identifikation (eID) zugeordnet ist, mit: Bereitstellen einer Mehrzahl von Gruppen von elektronischen Kommunikationsprofilen, wobei jede Gruppe von elektronischen Kommunikationsprofilen elektronischen Teilnehmeridentitätsmodulen mobiler Kommunikationsgeräte eines Benutzers zugeordnet ist, Empfangen einer elektronischen Identifikation eines elektronischen Teilnehmeridentitätsmoduls, Zuordnen der empfangenen elektronischen Identifikation einer Gruppe von elektronischen Kommunikationsprofilen, Auswählen eines elektronischen Kommunikationsprofils aus der Gruppe von elektronischen Kommunikationsprofilen, welche der empfangenen elektronischen Identifikation zugeordnet ist, und Aussenden des ausgewählten elektronischen Kommunikationsprofils an das mobile Kommunikationsgerät mit dem elektronischen Teilnehmeridentitätsmodul, das durch die elektronische Identifikation identifiziert ist.

In einer Ausführungsform wird das Verfahren mittels des Profilservers gemäß dem ersten Aspekt ausgeführt.

In einer Ausführungsform umfasst das Verfahren das Empfangen einer Mehrzahl von elektronischen Identifikationen von elektronischen Teilnehmeridentitätsmodulen, das Zuordnen der Mehrzahl von empfangenen elektronischen Identifikationen zu einer Gruppe oder zu mehreren Gruppen von elektronischen Teilnehmeridentitätsmodulen, das Auswählen eines Kommunikationsprofils aus der zugeordneten Gruppe von Kommunikationsprofifen für jedes elektronische Teilnehmeridentitätsmodul, und das Aussenden des jeweils ausgewählten Kommunikationsprofils an das jeweilige mobile Kommunikationsgerät über das Kommunikationsnetzwerk.

In einer Ausführungsform umfasst das Verfahren das Vergleichen der empfangenen elektronischen Identifikation mit gespeicherten elektronischen Identifikationen, um die Gruppe von elektronischen Kommunikationsprofilen, welche der empfangenen elektronischen Identifikation zugeordnet ist, auszuwählen.

In einer Ausführungsform ist jede Gruppe von elektronischen Kommunikationsprofilen durch einen Identifikator identifiziert ist, wobei jeder Identifikator elektronischen Identifikationen zugeordnet ist, und wobei der empfangenen elektronischen Identifikation der Identifikator der Gruppe von elektronischen Kommunikationsprofilen zugeordnet wird.

in einer Ausführungsform ist jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet, wobei der empfangenen elektronischen Identifikation die Gruppe von elektronischen Kommunikationsprofilen auf der Basis der Vertragsbeziehung zugeordnet wird.

Gemäß einem dritten Aspekt betrifft die Erfindung ein Subnetzwerk eines Kommunikationsnetzwerks mit einer Mehrzahl von Subnetzwerken, insbesondere von Punkt-zu-Punkt-Subnetzwerken, wobei das Subnetzwerk ausgebildet ist, elektronische Kommunikationsprofile für eine Gruppe von elektronischen Teilnehmeridentitätsmodulen (eSIM) mobiler Kommunikationsgeräte, welche einem Benutzer eines Kommunikationsnetzwerks zugeordnet sind, bereitzustellen, wobei jedem elektronischen Teilnehmeridentitätsmodul eine elektronische Identifikation (eID) zugeordnet ist, mit dem Profilserver nach dem ersten Aspekt.

In einer Ausführungsform ist das Subnetzwerk ein Punkt-zu-Punkt-Subnetzwerk oder eine Slice eines 5G-Kommunikationsnetzwerks.

In einer Ausführungsform ist das Subnetzwerk einem Benutzer des Kommunikationsnetzwerks zugeordnet, wobei der Profilserver ausgebildet ist, ausschließlich elektronische Kommunikationsprofile für die Gruppe von elektronischen Teilnehmeridentitätsmodulen (eSIM) mobiler Kommunikationsgeräte des Benutzers bereitzustellen.

Weitere Ausführungsbeispiele werden Bezug nehmend auf die beiliegenden Figuren näher erläutert. Es zeigen:
- Fig. 1: einen Profilserver in einem Kommunikationsszenario; und
- Fig. 2: ein Profil-Subnetzwerk in einem Kommunikationsszenario.

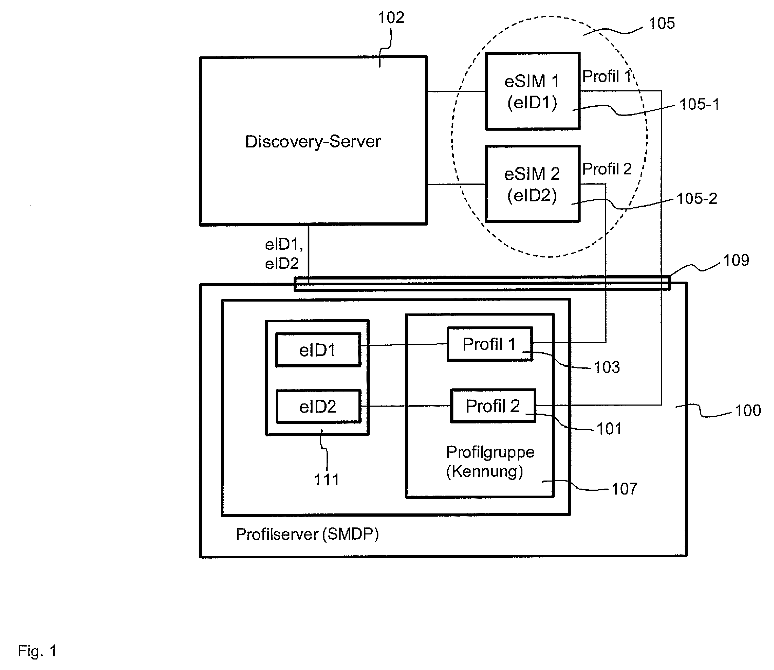

Fig. 1 zeigt einen Profilserver 100 in einem Kommunikationsszenario mit einem Discovery-Server 102. Der Profilserver 100 ist zum Bereitstellen von elektronischen Kommunikationsprofilen 101, 103 für eine Gruppe 105 von elektronischen Teilnehmeridentitätsmodulen 105-1, 105-2 (eSIMs) mobiler Kommunikationsgeräte, welche einem Benutzer eines Kommunikationsnetzwerks, beispielsweise eines Mobilfunknetzwerks, zugeordnet sind, vorgesehen. Dabei ist jedem elektronischen Teilnehmeridentitätsmodul 105-1, 105-2 eine elektronische Identifikation (eID: electronic Identification) zugeordnet.

Der Profilserver 100 umfasst einen Speicher 107, welcher eingerichtet ist, eine Mehrzahl von Gruppen 105 von elektronischen Kommunikationsprofilen 101, 103 zu speichern, wobei jede Gruppe 105 von elektronischen Kommunikationsprofilen 101, 103 elektronischen Teilnehmeridentitätsmodulen 105-1, 105-2 mobiler Kommunikationsgeräte eines Benutzers zugeordnet sind.

Der Profilserver 100 umfasst ferner eine Kommunikationsschnittstelle 109 zum Empfangen einer elektronischen Identifikation eines elektronischen Teilnehmeridentitätsmoduls. Die Kommunikationsschnittstelle 109 ist eine drahtlose Kommunikationsschnittstelle, beispielsweise eine LTE- oder UMTS-Kommunikationsschnittstelle.

Der Profilserver 100 umfasst ferner einen Prozessor 111, welcher ausgebildet ist, der empfangenen elektronischen Identifikation eine in dem Speicher 107 gespeicherte Gruppe von elektronischen Kommunikationsprofilen 101, 103 zuzuordnen und ein elektronisches Kommunikationsprofil 101, 103 aus der Gruppe von elektronischen Kommunikationsprofilen 101, 103, welche der empfangenen elektronischen Identifikation zugeordnet ist, auszuwählen.

Die Kommunikationsschnittstelle 109 ist ausgebildet, das ausgewählte elektronische Kommunikationsprofil 101, 103 an das mobile Kommunikationsgerät mit dem elektronischen Teilnehmeridentitätsmodul 105-1, 105-2, das durch die elektronische Identifikation identifiziert ist, auszusenden.

Im Profilserver 100 wird dem Benutzer eine eSIM/eID-Gruppe zugeordnet, wobei jeder eSIM der eSIM-Gruppe ein Kommunikationsprofil zugeordnet ist, das beispielsweise die Anforderungen der ggf. unterschiedlichen Kommunikationsgeräte an Konnektivität, beispielswese Datenrate, erfüllt. So hat beispielsweise ein Internet-fähiger Kühlschrank weniger Bandbreitenbedarf als ein Smartphone (UE), sodass dem Kühlschrank weniger Bandbreite zugewiesen werden kann als dem UE.

In einer Ausführungsform können die eSIMs Bootstrapprofile aufweisen, welche eine initiale Konnektivität zu dem in Fig. 1 beispielhaft dargestellten Discovery-Server 102 herstellen. Der Discovery-Server 102 übermittelt daraufhin eine URI des Profilservers 100 an das in Fig. 1 nicht dargestellte mobile Kommunikationsgerät, das daraufhin ein Kommunikationsprofil bei dem Profilserver 100 abrufen kann.

In einer anderen Ausführungsform haben die eSIMs Kenntnis der URI des Profilservers 100, welcher direkt und ohne Umweg über den Discovery-Server 102 angesteuert werden kann. In diesem Fall kann auf den Discovery-Server 102 verzichtet werden.

Der Profilserver 100, welcher ein SMDP+-Server sein kann, ordnet in einer Ausführungsform beispielsweise die eIDs der eSIMs 105-1, 105-2 einer Vertragsbeziehung zwischen dem Benutzer und einem Betreiber des Kommunikationsnetzwerks zu. Dadurch können die eSIMs 105-1, 105-2 einer Profilgruppe und somit einem Vertrag zugeordnet werden. Die Profile werden dann an die eSIMs (eUICCs) übertragen.

In einer Ausführungsform kann der Profilserver 100 in einem Punkt-zu-Punkt-Subnetzwerk angeordnet werden, welches als Dienst die vorstehend beschriebene Verwaltung von Kommunikationsprofilen bereitstellt.

In einer Ausführungsform kann in dem Profilserver 100 eine weitere eID einer weiteren eSIM sowie der Gruppe von Kommunikationsprofilen ein weiteres Kommunikationsprofil hinzugefügt werden. Auf diese Weise können adaptiv weitere Kommunikationsgeräte, welche beispielsweise einem Vertrag des Benutzers zugeordnet sind, effizient verwaltet werden.

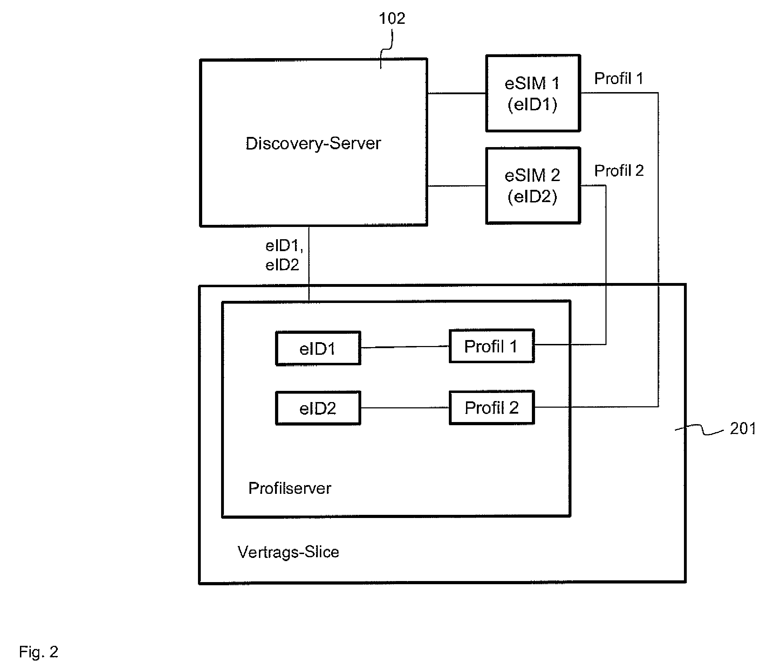

Fig. 2 zeigt schematisch ein derartiges Subnetzwerk 201, welches ein Slice eines 5G-Kommunikationsnetzwerks sein kann. Das Subnetzwerk 201 ist beispielsweise ein Punkt-zu-Punkt-Subnetzwerk.

Das Subnetzwerk 201 ist ausgebildet, elektronische Kommunikationsprofile 101, 103 für eine Gruppe von elektronischen Teilnehmeridentitätsmodulen 105-1, 105-2 mobiler Kommunikationsgeräte, welche einem Benutzer eines Kommunikationsnetzwerks zugeordnet sind, bereitzustellen, wobei jedem elektronischen Teilnehmeridentitätsmodul 105-1, 105-2 eine elektronische Identifikation (eID) zugeordnet ist. In dem Subnetzwerk 201 ist der Profilserver 100 angeordnet.

Das Subnetzwerk 201 kann für einen einzigen Benutzer bereitgestellt werden und ausgebildet sein, die Kommunikationsprofile der eSIMs, welche dem Benutzer beispielsweise aufgrund eines Vertrags zugeordnet sind, zu verwalten.

In einer Ausführungsform kann die URI des Subnetzwerks 201 im Discovery-Server 102 hinterlegt werden.

In einer Ausführungsform kann auf den Discovery-Server 102 verzichtet werden, indem die Bootstrapprofile der eSIMs die URI des Subnetzwerks 201 kennen.

In einer Ausführungsform ist der Discovery-Server 102 kein Element des Subnetzwerks 201. In einer weiteren Ausführungsform ist der Discovery-Server 102 ein Element des Subnetzwerks 201.

## Patentansprüche

1. Profilserver (100) zum Bereitstellen von elektronischen Kommunikationsprofilen (101, 103) für eine Gruppe (105) von elektronischen Teilnehmeridentitätsmodulen (105-1, 105-2) mobiler Kommunikationsgeräte, welche einem Benutzer eines Kommunikationsnetzwerks zugeordnet sind, wobei jedem elektronischen Teilnehmeridentitätsmodul (105-1, 105-2) eine elektronische Identifikation (eID) zugeordnet ist, mit:
einem Speicher (107), welcher eingerichtet ist, eine Mehrzahl von Gruppen (105) von elektronischen Kommunikationsprofilen (101, 103) zu speichern, wobei jede Gruppe (105) von elektronischen Kommunikationsprofilen (101, 103) elektronischen Teilnehmeridentitätsmodulen (105-1, 105-2) mobiler Kommunikationsgeräte eines Benutzers zugeordnet ist;
einer Kommunikationsschnittstelle (109) zum Empfangen einer elektronischen Identifikation eines elektronischen Teilnehmeridentitätsmoduls; und
einem Prozessor (111), welcher ausgebildet ist, der empfangenen elektronischen Identifikation eine in dem Speicher (107) gespeicherte Gruppe von elektronischen Kommunikationsprofilen (101, 103) zuzuordnen und ein elektronisches Kommunikationsprofil (101, 103) aus der Gruppe von elektronischen Kommunikationsprofilen (101, 103), welche der empfangenen elektronischen Identifikation zugeordnet ist, auszuwählen; wobei
die Kommunikationsschnittstelle (109) ausgebildet ist, das ausgewählte elektronische Kommunikationsprofil (101, 103) an das mobile Kommunikationsgerät mit dem elektronischen Teilnehmeridentitätsmodul (105-1, 105-2), das durch die elektronische Identifikation identifiziert ist, auszusenden.

2. Profilserver (100) nach Anspruch 1, wobei die Kommunikationsschnittstelle (109) ausgebildet ist, eine Mehrzahl von elektronischen Identifikationen von elektronischen Teilnehmeridentitätsmodulen zu empfangen, wobei der Prozessor (111) ausgebildet ist, der Mehrzahl von empfangenen elektronischen Identifikationen eine Gruppe oder mehrere Gruppen von elektronischen Teilnehmeridentitätsmodulen zuzuordnen, für jedes elektronische Teilnehmeridentitätsmodul ein Kommunikationsprofil aus der zugeordneten Gruppe von Kommunikationsprofilen auszuwählen und das jeweils ausgewählte Kommunikationsprofil an das jeweilige mobile Kommunikationsgerät auszusenden.

3. Profilserver (100) nach einem der vorstehenden Ansprüche, wobei der Speicher (107) ausgebildet ist, elektronische Identifikationen zu speichern, welche einer Gruppe von elektronischen Kommunikationsprofilen zugeordnet sind, und wobei der Prozessor (111) ausgebildet ist, die empfangene elektronische Identifikation mit gespeicherten elektronischen Identifikationen zu vergleichen, um die Gruppe von elektronischen Kommunikationsprofilen, welche der empfangenen elektronischen Identifikation zugeordnet ist, auszuwählen.

4. Profilserver (100) nach einem der vorstehenden Ansprüche, wobei jede Gruppe von elektronischen Kommunikationsprofilen durch einen Identifikator identifizierbar ist, wobei jeder Identifikator elektronischen Identifikationen zugeordnet ist, und wobei der Prozessor (111) ausgebildet ist, der empfangenen elektronischen Identifikation den Identifikator der Gruppe von elektronischen Kommunikationsprofilen zuzuordnen.

5. Profilserver (100) nach einem der vorstehenden Ansprüche, wobei jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet ist, und wobei der Prozessor (111) ausgebildet ist, der empfangenen elektronischen Identifikation die Gruppe von elektronischen Kommunikationsprofilen auf der Basis der Vertragsbeziehung zuzuordnen.

6. Profilserver (100) nach einem der vorstehenden Ansprüche, welcher ein SMDP-Server ist.

7. Profilserver (100) nach einem der vorstehenden Ansprüche, wobei die Kommunikationsschnittstelle (109) eine drahtlose Kommunikationsschnittstelle, insbesondere eine LTE- oder UMTS-Kommunikatiansschnittstelle ist.

8. Verfahren zum Bereitstellen von elektronischen Kommunikationsprofilen (101, 103) für eine Gruppe (105) von elektronischen Teilnehmeridentitätsmodulen (105-1, 105-2) mobiler Kommunikationsgeräte, welche einem Benutzer eines Kommunikationsnetzwerks zugeordnet sind, wobei jedem elektronischen Teilnehmeridentitätsmodul (105-1, 105-2) eine elektronische Identifikation (eID) zugeordnet ist, mit:
Bereitstellen einer Mehrzahl von Gruppen von elektronischen Kommunikationsprofilen, wobei jede Gruppe von elektronischen Kommunikationsprofilen elektronischen Teilnehmeridentitätsmodulen mobiler Kommunikationsgeräte eines Benutzers zugeordnet ist;
Empfangen einer elektronischen Identifikation eines elektronischen Teilnehmeridentitätsmoduls (105-1, 105-2);
Zuordnen der empfangenen elektronischen Identifikation zu einer Gruppe von elektronischen Kommunikationsprofilen (101, 103);
Auswählen eines elektronischen Kommunikationsprofils (101, 103) aus der Gruppe von elektronischen Kommunikationsprofilen, welche der empfangenen elektronischen Identifikation zugeordnet ist; und
Aussenden des ausgewählten elektronischen Kommunikationsprofils (101, 103) an das mobile Kommunikationsgerät mit dem elektronischen Teilnehmeridentitätsmodul (105-1, 105-2), das durch die elektronische Identifikation identifiziert ist.

9. Verfahren nach Anspruch 8, mit:
Empfangen einer Mehrzahl von elektronischen Identifikationen von elektronischen Teilnehmeridentitätsmodulen;
Zuordnen der Mehrzahl von empfangenen elektronischen Identifikationen zu einer Gruppe oder zu mehreren Gruppen von elektronischen Teilnehmeridentitätsmodulen;
Auswählen eines Kommunikationsprofils aus der zugeordneten Gruppe von Kommunikationsprofilen für jedes elektronische Teilnehmeridentitätsmodul; und
Aussenden des jeweils ausgewählten Kommunikationsprofils an das jeweilige mobile Kommunikationsgerät über das Kommunikationsnetzwerk.

10. Verfahren nach einem der Ansprüche 8 oder 9, mit:
Vergleichen der empfangenen elektronischen Identifikation mit gespeicherten elektronischen Identifikationen, um die Gruppe von elektronischen Kommunikationsprofilen, welche der empfangenen elektronischen Identifikation zugeordnet ist, auszuwählen.

11. Verfahren nach einem der Ansprüche 8 bis 10, wobei jede Gruppe von elektronischen Kommunikationsprofilen durch einen Identifikator identifiziert ist, wobei jeder Identifikator elektronischen Identifikationen zugeordnet ist, und wobei der empfangenen elektronischen Identifikation der Identifikator der Gruppe von elektronischen Kommunikationsprofilen zugeordnet wird.

12. Verfahren nach einem der Ansprüche 8 bis 11, wobei jede Gruppe von elektronischen Kommunikationsprofilen einer elektronischen Vertragsbeziehung zwischen einem Benutzer des Kommunikationsnetzwerks und einem Betreiber des Kommunikationsnetzwerks zugeordnet ist, und der empfangenen elektronischen Identifikation die Gruppe von elektronischen Kommunikationsprofilen auf der Basis der Vertragsbeziehung zugeordnet wird.

13. Subnetzwerk (201) eines Kommunikationsnetzwerks mit einer Mehrzahl von Subnetzwerken, insbesondere von Punkt-zu-Punkt-Subnetzwerken, wobei das Subnetzwerk (201) ausgebildet ist, elektronische Kommunikationsprofile (101, 103) für eine Gruppe von elektronischen Teilnehmeridentitätsmodulen (105-1, 105-2) mobiler Kommunikationsgeräte, welche einem Benutzer eines Kommunikationsnetzwerks zugeordnet sind, bereitzustellen, wobei jedem elektronischen Teilnehmeridentitätsmodul (105-1, 105-2) eine elektronische Identifikation (eID) zugeordnet ist, mit:
dem Profilserver (100) nach einem der Ansprüche 1 bis 7.

14. Subnetzwerk (201) nach Anspruch 13, das ein Punkt-zu-Punkt-Subnetzwerk oder eine Slice eines 5G-Kommunikationsnetzwerks ist.

15. Subnetzwerk (201) nach einem der Ansprüche 13 oder 14, das einem Benutzer des Kommunikationsnetzwerks zugeordnet ist, wobei der Profilserver ausgebildet ist, ausschließlich elektronische Kommunikationsprofile für die Gruppe von elektronischen Teilnehmeridentitätsmodulen (eSIM) mobiler Kommunikationsgeräte des Benutzers bereitzustellen.
